# EUROPEAN PATENT SPECIFICATION

(11) **EP 3 316 518 B1**
(45) Date of publication and mention of the grant of the patent: **18.09.2019**
(21) Application number: 16816951.4
(22) Date of filing: 09.03.2016
(51) Int. Cl.: H04L 12/24

(54) **METHOD AND DEVICE FOR UPGRADING VIRTUAL NETWORK ELEMENT, AND COMPUTER STORAGE MEDIUM**
VERFAHREN UND VORRICHTUNG ZUR AKTUALISIERUNG EINES VIRTUELLEN NETZWERKELEMENTS UND COMPUTERSPEICHERMEDIUM
PROCÉDÉ ET DISPOSITIF DE MISE À NIVEAU D'UN ÉLÉMENT DE RÉSEAU VIRTUEL, ET SUPPORT DE STOCKAGE INFORMATIQUE

(30) Priority: 29.06.2015 CN 201510367164
(43) Date of publication of application: 02.05.2018
(73) Proprietor: ZTE Corporation, Shenzhen, Guangdong 518057 (CN)
(72) Inventor: PAN, Jiaqiang, Shenzhen Guangdong 518057 (CN)
(74) Representative: Brevalex
(86) International application number: PCT/CN2016/075978
(87) International publication number: WO 2017/000586

(56) References cited:
- EP-A1- 1 876 527
- CN-A- 101 764 703
- CN-A- 104 142 847
- CN-A- 104 205 730
- CN-A- 104 410 672
- US-A1- 2010 106 885
- "Network Functions Virtualisation (NFV); Management and Orchestration", GROUP SPECIFICATION, EUROPEAN TELECOMMUNICATIONS STANDARDS INSTITUTE (ETSI), 650, ROUTE DES LUCIOLES ; F-06921 SOPHIA-ANTIPOLIS ; FRANCE, vol. NFV MAN, no. V1.1.1, 31 December 2014 (2014-12-31), XP014235740,
- "3rd Generation Partnership Project; Technical Specification Group Services and System Aspects; Telecommunication management; Study on network management of virtualized networks (Release 13)", 3GPP DRAFT; 32842-110_REMARKS R1, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE , 29 May 2015 (2015-05-29), XP050978997, Retrieved from the Internet: URL:http://www.3gpp.org/ftp/tsg_sa/WG5_TM/ TSGS5_101/Docs/ [retrieved on 2015-05-29]

## Description

### TECHNICAL FIELD

The invention relates to the technical field of communications, and particularly to a method and device and a computer storage medium for upgrading a Virtual Network Function (VNF).

### BACKGROUND

In a wireless communication system, network element upgrading is part of network function management. At present, a physical network element is used in a telecommunication operation network, and an upgrading process of the physical network element inevitably involves power-off, upgrading and restarting of the network element. However, in a period of time from power-off of the physical network element to restarting of the physical network element, it is impossible for the physical network element to provide any business service. Moreover, online upgrading of the physical network element requires a relatively long time, and this makes it impossible for the physical network element to provide business service during network element upgrading. Therefore, an existing network element upgrading manner has bad influence on normal running of a communication service.

CN 104410672A discloses a method for upgrading an application, so as to implement an automated procedure for upgrading a network functions virtualization application.

Document entitled "Network Functions Virtualisation (NFV); Management and Orchestration" discloses a method for updating VNF package.

### SUMMARY

Embodiments of the invention provide a method and a device and a computer storage medium for upgrading a VNF, for solving the problem that an existing physical network element upgrading manner has bad influence on normal running of a communication service.

The features of the method, the device and the computer storage medium for upgrading a VNF according to the present disclosure are defined in the independent claims, and the preferable features according to the present disclosure are defined in the dependent claims.

The embodiments of the invention have the following beneficial effects.

According to the embodiments of the invention, the VNF is used in a wireless communication system, and when the VNF is required to be upgraded, the virtual machine corresponding to a pre-created virtual machine of a latest version in the VNF is replaced with the pre-created virtual machine of the latest version to implement upgrading of the VNF. With the embodiments of the invention, even in an upgrading process of the VNF, the VNF may still normally run, and may normally provide business service.

### BRIEF DESCRIPTION OF DRAWINGS

FIG. 1 is a flowchart of a method for upgrading a VNF according to a first embodiment of the invention.
FIG. 2 is a flowchart of a method for upgrading a VNF according to a second embodiment of the invention.
FIG. 3 is a flowchart of a method for upgrading a VNF according to a third embodiment of the invention.
FIG. 4 is a time sequence diagram of a method for upgrading a VNF according to a fourth embodiment of the invention.
FIG. 5 is a structure diagram of a device for upgrading a VNF according to a fifth embodiment of the invention.

### DETAILED DESCRIPTION

Along with continuous development of a cloud computing technology, a cloud platform is widely applied to multiple fields. On such a basis, a Network Functions Virtualization (NFV) technology is proposed in the telecommunication industry.

In order to improve flexibility of a communication network, reduce network cost and improve network stability, a physical network element in a network of a telecommunication operating company is replaced with an NFV technology-based VNF to decouple a network function from a specific hardware. The VNF is isolated from a Network Functions Virtualization Infrastructure (NFVI) of a bottom layer.

A Virtual Network Function element, called as a VNF, has the same function with a physical network element, and a difference between them in implementation is that the VNF is virtual equipment and the physical network element is physical equipment. However, in an application process, for the physical network element, resources are prone to be limited, while a resource may be provided for the VNF to maximum extent as required, and then the amount of the resource is automatically and elastically extended and reduced according to a load size, to avoid resource waste or shortage.

The invention will further be described below in combination with the drawings and embodiments in detail. It should be understood that the specific embodiments described here are adopted not to limit the invention but only to explain the invention.

### First embodiment

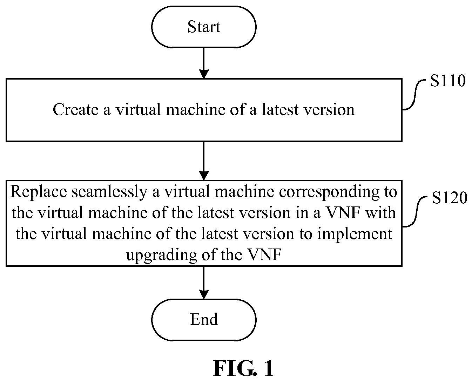

The embodiment provides a method for upgrading a VNF. FIG. 1 is a flowchart of a method for upgrading a VNF according to a first embodiment of the invention.

In Step S110, a virtual machine of a latest version is created.

The virtual machine refers to a complete computer system having a complete hardware system function and running in a completely isolated environment, which is simulated by software.

The VNF includes an OMM virtual machine, an OMP virtual machine and other service processing virtual machines. Upgrading of the VNF represents upgrading of the virtual machines in the VNF.

The OMM virtual machine runs in background, and is configured to monitor a working condition of a digital program controlled switch.

The OMP virtual machine runs in foreground, and is configured to manage the service processing virtual machine and process communications in both foreground and background.

Before the VNF is upgraded, a preset upgrading time period is required to be preset, and the upgrading time period is a time period specially applied in advance for upgrading the VNF, for execution of an upgrading operation in this upgrading time period, the upgrading operation would affect normal service running of the VNF. The upgrading time period may be, for example: 0:00∼4:00 in every morning. A starting moment of the upgrading time period is called as an upgrading moment. In the embodiment, before the preset upgrading moment, an OMP virtual machine of a latest version and an OMM virtual machine of a latest version may be pre-created, so that an OMP virtual machine of a low version and an OMM virtual machine of a low version in the VNF may be replaced with the OMP virtual machine of the latest version and the OMM virtual machine of the latest version.

In Step S120, a virtual machine corresponding to the virtual machine of the latest version in a VNF is replaced with the virtual machine of the latest version to implement upgrading of the VNF.

The upgrading time period is limited, and a relative short upgrading time period may result in that not all the virtual machines in the VNF is upgraded so that the upgrading is failed. in the embodiment, the virtual machine of each type is respectively upgraded within or outside the upgrading time period according to influence of the virtual machines of different types on service operation of the VNF and upgrading characteristics of the virtual machines.

Since upgrading of the OMM virtual machine has no influence on service operation of the VNF, the OMM virtual machine in the VNF may be replaced with the OMM virtual machine of the latest version before the preset upgrading moment. Furthermore, the OMM virtual machine in the VNF may be upgraded on line, and the OMM virtual machine of the low version in the VNF may also be replaced with the pre-created OMM virtual machine of the latest version.

Since upgrading of the OMP virtual machine requires a relatively long time and may have influence on service operation of the VNF, the OMP virtual machine in the VNF is seamlessly replaced with the OMP virtual machine of the latest version to implement replacement of the OMP virtual machine at the preset upgrading moment.

Since the other service processing virtual machines except the OMM virtual machine and the OMP virtual machine are upgraded under control of the OMP virtual machine and upgrading processes have no influence on normal service operation of the VNF, after upgrading of the OMP virtual machine is completed, these service processing virtual machines may be controlled to be upgraded by the OMP virtual machine within or after the upgrading time period.

Before the upgrading time period, the OMM virtual machine is upgraded at first; and within the upgrading time period, upgrading of the OMP virtual machine is processed, the OMP virtual machine of the low version in the VNF is replaced with the OMP virtual machine of the latest version, and the other service processing virtual machines are upgraded through the OMP virtual machine. In such a manner, it may be ensured that upgrading of the OMP virtual machine and a service processing module may be completed within the exact upgrading time period, and it is further ensured that upgrading of the VNF may be completed, and upgrading efficiency of the VNF may be improved.

### Second embodiment

In the embodiment, a VNF may not adopt a redundant design, that is, virtual machines in the VNF only include a master virtual machine and a standby virtual machine.

If there are no redundant virtual machines, a virtual machine of a latest version may be pre-created; when a master virtual machine of a low version is upgraded, the virtual machine of the latest version as a standby virtual machine accesses to the VFN; data synchronization is performed between the standby virtual machine of the latest version and the master virtual machine of the low version; and the standby virtual machine of the latest version is switched to be a master virtual machine, and the master virtual machine of the low version is switched to be a standby virtual machine and deleted. In such a manner, in a process of upgrading the VNF, the VNF may not stop running, and service operation may not be interrupted.

In the embodiment, the VNF may also adopt the redundant design to improve security of the VNF, that is, types of the virtual machines in the VNF include master virtual machines and standby virtual machines. Furthermore, each of OMM virtual machines, OMP virtual machines and other virtual machines include a master virtual machine and a standby virtual machine. In general, in the VNF, a pair of master and standby OMM virtual machines, a pair of master and standby OMP virtual machines and service processing virtual machines at a master-standby proportion of 1:n are set, in which, n≥1.

If the VNF includes a master OMP virtual machine and a standby OMP virtual machine, when the virtual machine of the latest version is created, only a first OMP virtual machine of a latest version is created, or the first OMP virtual machine of a latest version and a second OMP virtual machine of a latest version are created. The master OMP virtual machine in the VNF is replaced with the first OMP virtual machine, and the standby OMP virtual machine in the VNF is upgraded on line; or, the master OMP virtual machine in the VNF is replaced with the first OMP virtual machine, and the standby OMP virtual machine in the VNF is replaced with the second OMP virtual machine. In such a manner, seamless replacement of the OMP virtual machines may be implemented in terms of time, and it may be ensured that, in a process of upgrading the OMP virtual machines, the VNF may normally run and service operation is not influenced.

A replacement manner of the OMM virtual machines may refer to a replacement manner of the OMP virtual machines. In the embodiment, preferably, replacement of the OMM virtual machines is completed at first, and then the OMP virtual machines of the latest version are created. Upgrading of the OMM virtual machines may also be completed in an online upgrading manner, and if the online upgrading manner is adopted, the standby OMM virtual machine is upgraded on line at first, and then the master OMM virtual machine is upgraded.

### Third embodiment

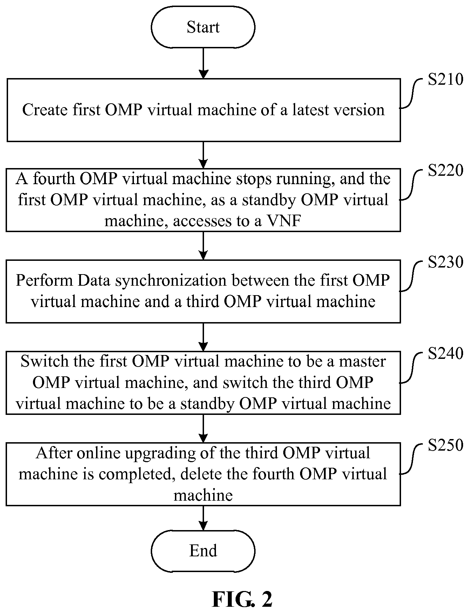

Replacement of a master OMP virtual machine in a VNF with a first OMP virtual machine and online upgrading of a standby OMP virtual machine in the VNF are further described in the embodiment. FIG. 2 is a flowchart of a method for upgrading a VNF according to a second embodiment of the invention. In the embodiment, OMP virtual machines running in the VNF include: a third OMP virtual machine and a fourth OMP virtual machine, where the third OMP virtual machine serves as a master OMP virtual machine, and the fourth OMP virtual machine serves as a standby OMP virtual machine.

In Step S210, a first OMP virtual machine of a latest version is created.

In Step one, a new configuration data file of the VNF is obtained.

The new configuration data file is generated by an OMM virtual machine of a latest version.

Upgrading the OMM virtual machine in background may change configuration data in foreground of the VNF, therefore, before the first OMP virtual machine is created, the OMM virtual machine is upgraded at first; and after upgrading of the OMM virtual machine is completed, the OMM virtual machine of the latest version regenerates configuration data file of the VNF for the foreground. The configuration data file includes configuration data newly added for a newly added function. The new function after upgrading of the OMP virtual machine requires the newly added configuration data.

In Step two, a virtual machine resource is applied for being used by the first OMP virtual machine.

The virtual machine resource includes: a hardware resource and/or software resource required by the first OMP virtual machine. For example, the applied virtual machine resource includes: a Central Processing Unit (CPU), a memory, a hard disk, a network card and the like.

In Step three, a new-version OMP mirror image file is acquired.

The new-version OMP mirror image file on includes: a mirror image file of an OMP operating system of a new-version and an OMP new-version file. The OMP new-version file is an executable file including a new function.

Similarly, the OMM virtual machine may also have a mirror image file of an OMM operating system of a new version. In Step four, the first OMP virtual machine is created based on the applied virtual machine resource according to the new configuration data file of the VNF and the OMP mirror image file.

After creation of the virtual machines (the OMM virtual machine and the OMP virtual machine) is completed, a unique code corresponding to each virtual machine is generated.

In Step S220, the fourth OMP virtual machine stops running, and the first OMP virtual machine, as a standby OMP virtual machine, accesses to the VNF.

In Step one, unique codes of virtual machine parameters of the first OMP virtual machine, the third OMP virtual machine and the fourth OMP virtual machine are acquired.

In Step two, at an upgrading moment, the fourth OMP virtual machine is powered off.

When the virtual machines are operated and controlled, the virtual machines are recognized according to the unique codes of the virtual machines. Furthermore, the fourth OMP virtual machine is recognized according to the unique code of the fourth OMP virtual machine to operate and control the OMP virtual machine.

In Step three, the first OMP virtual machine is powered on, and the first OMP virtual machine is set to be the standby OMP virtual machine.

In Step S230, data synchronization is performed between the first OMP virtual machine and the third OMP virtual machine.

A function of data synchronization is to synchronize data, for example, dynamic data, of the third OMP virtual machine when the third OMP virtual machine is running as the master OMP virtual machine into the first OMP virtual machine such that the data in the master OMP virtual machine is included in the first OMP virtual machine.

In Step S240, the first OMP virtual machine is switched to be a master OMP virtual machine, and the third OMP virtual machine is switched to be a standby OMP virtual machine.

The step is adopted to implement replacement of the master OMP virtual machine in the VNF with the first OMP virtual machine.

When the first OMP virtual machine includes the data in the master OMP virtual machine, the first OMP virtual machine is qualified to serve as a master OMP virtual machine. Therefore, the first OMP virtual machine may be switched to be a master OMP virtual machine, and the third OMP virtual machine may be switched to be a standby OMP virtual machine.

In Step S250, after online upgrading of the third OMP virtual machine is completed, the fourth OMP virtual machine is deleted.

Since the first OMP virtual machine serving as the master OMP virtual machine is a virtual machine of a latest version, only the third OMP virtual machine serving as the standby OMP virtual machine is required to be upgraded.

Before the third OMP virtual machine is upgraded, service verification may be performed on the first OMP virtual machine; if verification succeeds, the third OMP virtual machine is upgraded, and the fourth OMP virtual machine is deleted; and if verification fails, rollback processing is executed.

Service verification refers to that: whether a function of the VNF is normal is verified based on the first OMP virtual machine, it is indicated that verification succeeds if the function of the VNF is normal, and if the function of the VNF is abnormal and an error occurs, it is indicated that verification fails.

Rollback processing refers to that: the first OMP virtual machine is powered off, the third OMP virtual machine is reset to be a master OMP virtual machine, the fourth OMP virtual machine is set to be a standby OMP virtual machine. That is, rollback processing refers that the VNF is reset to the original version and upgrading is suspended.

After upgrading of the third OMP virtual machine is completed, the master OMP virtual machine and standby OMP virtual machine in the VNF are virtual machines of a latest version, the fourth OMP virtual machine stopped running may be deleted such that a virtual machine resource occupied by the fourth OMP virtual machine is released.

If the first OMP virtual machine has a failure when the third OMP virtual machine is upgraded on line, the fourth OMP virtual machine is re-powered on, and the fourth OMP virtual machine serves as a master OMP virtual machine.

In the embodiment, when the master OMP virtual machine is seamlessly replaced within the upgrading time period, the virtual machine resource of only one OMP virtual machine is required to be applied for, so that the problem of resource shortage may be alleviated, upgrading is facilitated, and moreover, a risk in an upgrading failure caused by upgrading of all the virtual machines within the upgrading time period may be lowered.

### Fourth embodiment

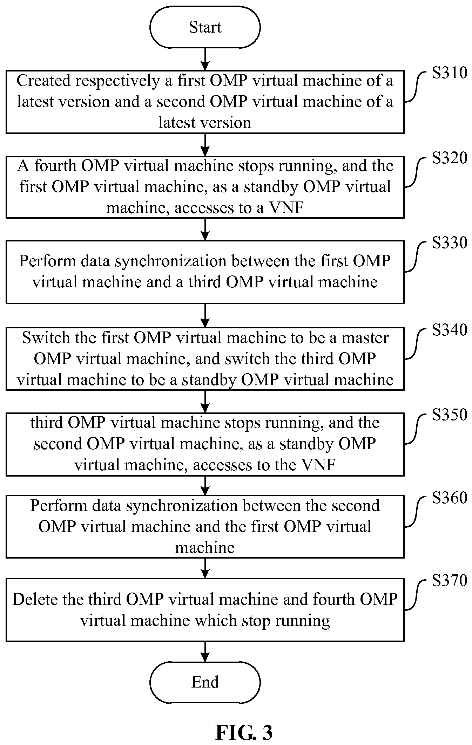

Replacement of a master OMP virtual machine in a VNF with a first OMP virtual machine and replacement of a standby OMP virtual machine in the VNF with a second OMP virtual machine are further described in the embodiment. FIG. 3 is a flowchart of a method for upgrading a VNF according to a third embodiment of the invention. In the embodiment, OMP virtual machines running in the VNF include: a third OMP virtual machine and a fourth OMP virtual machine, where the third OMP virtual machine serves as a master OMP virtual machine, and the fourth OMP virtual machine serves as a standby OMP virtual machine.

In Step S310, a first OMP virtual machine of a latest version and a second OMP virtual machine of a latest version are created respectively.

A process of creating the first OMP virtual machine and the second OMP virtual machine may refer to descriptions in Step S210. Creation of the second OMP virtual machine is only required to replace the first OMP virtual machine in Step S210 with the second OMP virtual machine.

In Step S320, the fourth OMP virtual machine stops running, and the first OMP virtual machine accesses the VNF as a standby OMP virtual machine.

The fourth OMP virtual machine serving as the standby OMP virtual machine is powered off, while the first OMP virtual machine, as a standby OMP virtual machine, accesses to the VNF.

In Step S330, data synchronization is performed between the first OMP virtual machine and the third OMP virtual machine.

In a data synchronization process, the third OMP virtual machine synchronizes data thereof when the third OMP virtual machine is running as a master OMP virtual machine to the first OMP virtual machine.

In Step S340, the first OMP virtual machine is switched to be a master OMP virtual machine, and the third OMP virtual machine is switched to be a standby OMP virtual machine.

The step is adopted to implement replacement of the master OMP virtual machine in the VNF with the first OMP virtual machine.

In Step S350, the third OMP virtual machine stops running, and the second OMP virtual machine, as a standby OMP virtual machine, accesses to the VNF.

The third OMP virtual machine serving as a standby OMP virtual machine is powered off while the second OMP virtual machine, as the standby OMP virtual machine, accesses to the VNF.

In Step S360, data synchronization is performed between the second OMP virtual machine and the first OMP virtual machine.

After the second OMP virtual machine, as the standby OMP virtual machine, accesses to the VNF, the second OMP virtual machine is required to obtain data in the master OMP virtual machine. Data synchronization may be performed between the second OMP virtual machine and the first OMP virtual machine to enable the second OMP virtual machine to obtain the data in the master OMP virtual machine. Furthermore, the data in the first OMP virtual machine is obtained from the third OMP virtual machine when data synchronization is performed between the first OMP virtual machine and the third OMP virtual machine.

In Step S370, the third OMP virtual machine and fourth OMP virtual machine which stop running are deleted.

Before the third OMP virtual machine and the fourth OMP virtual machine are deleted, service verification may be performed on the first OMP virtual machine and the second OMP virtual machine; if verification succeeds, the third OMP virtual machine and the fourth OMP virtual machine are deleted; and if verification fails, rollback processing is executed, the third OMP virtual machine is determined to be the master OMP virtual machine again, and the fourth OMP virtual machine is determined to be the standby OMP virtual machine.

In the embodiment, the master OMP virtual machine and the standby OMP virtual machine are pre-created, and the master and standby OMP virtual machines of the low version in the VNF are seamlessly replaced in terms of time. In such a manner, bad influence of a VNF upgrading process on a communication service may be avoided, that is, a service of the VNF is not influenced in the VNF upgrading process. Moreover, with the embodiment, the problem of relatively long online upgrading time is avoided, time for upgrading of the VNF is shortened, upgrading efficiency of the VNF is improved and a risk caused by upgrading of the VNF is lowered.

### Fifth embodiment

The embodiment provides a VNF upgrading system. The system includes: a VNF Manager(s) (VNFM), a Virtualized Infrastructure Manager(s) (VIM), a Network Function Virtualization Orchestrator (NFVO), a version center and a VNF.

The VNFM manages a lifecycle of a VNF, namely managing the VNF.

The VIM manages a virtualized infrastructure of a bottom layer of the VNF, and provides virtual resources.

The NFVO is responsible for managing a network plan, implement layout of the virtual resources and enabling one or more VNFs to complete a specific service.

The version center is responsible for storing a file of an operating system of each version.

The version center may be set in storage equipment; the NFVO, the VNFM, the VNF and the VIM may run in a virtual environment; the VNF may run in the VIM; and the NFVO may provide a user interface, and an operator may manage the network plan and a resource layout through the user interface.

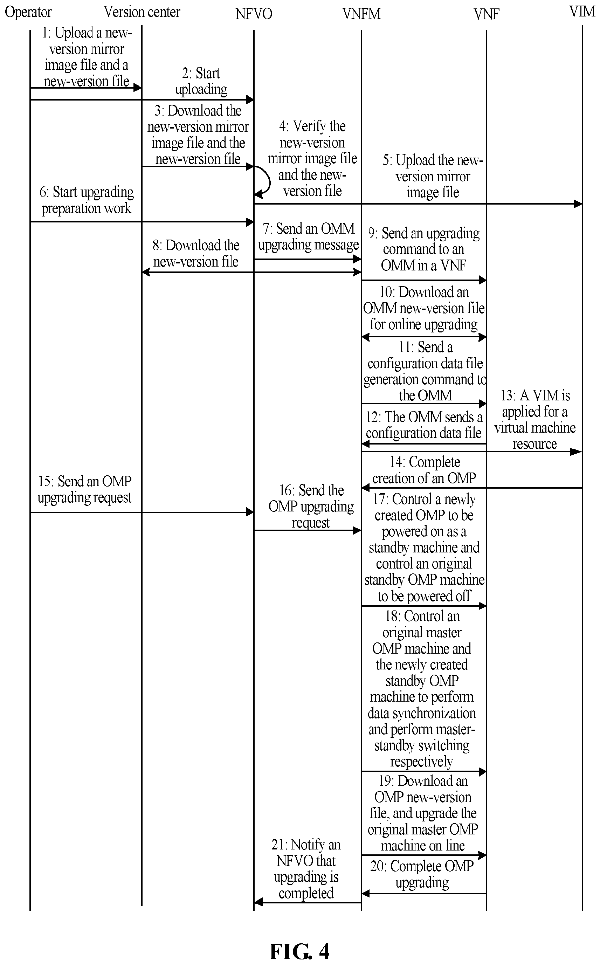

Replacement of a master OMP virtual machine in the VNF with a first OMP virtual machine and online upgrading of a standby OMP virtual machine in the VNF are further described on the basis of the abovementioned system in the embodiment. FIG. 4 is a time sequence diagram of a method for upgrading a VNF according to a fourth embodiment of the invention. In order to make the embodiment conveniently understood, an operator item is added into the time sequence diagram of the embodiment.

In Step one, the operator uploads a new-version mirror image file and a new-version file to the version center through a File Transfer Protocol (FTP).

The new-version mirror image file includes anew-version OMM mirror image file and anew-version OMP mirror image file. The new-version OMM mirror image file includes: an OMM operating system mirror image file and an OMM new-version file. The OMP mirror image file of the latest version includes: an OMP operating system mirror image file and an OMP new-version file.

The new-version OMM mirror image file and new-version OMP mirror image file of the embodiment are both configured to be inseparable files, that is, the OMM operating system mirror image file and OMM new-version file in the new-version OMM mirror image file are inseparable, and the OMP operating system mirror image file and OMP new-version file in the new-version OMP mirror image file are also inseparable. Therefore, in order to facilitate upgrading of an OMM virtual machine (called as OMM for short hereinafter) and an OMP virtual machine (called as OMP for short hereinafter), the OMM new-version file and the OMP new-version file are independently uploaded in the embodiment. In Step two, the operator transmits a version uploading starting instruction to the NFVO.

Version uploading refers to a process of uploading the new-version mirror image file to the VIM.

In Step three, the NFVO locally downloads the new-version mirror image file and the new-version file from the version center.

In Step four, the NFVO verifies the new-version mirror image file and the new-version file.

If verification succeeds, the new-version mirror image file is uploaded to the VIM, and the operator is prompted that uploading is completed; and if verification fails, the operator is prompted for re-uploading. For example, the NFVO verifies integrity, security and the like of the new-version mirror image file.

In Step five, the new-version mirror image file passing verification is uploaded to the VIM.

In Step six, the operator starts upgrading preparation work.

In Step seven, the NFVO sends an OMM upgrading message to the VNFM. The OMM upgrading message includes a storage address of the new-version file in the version center.

In Step eight, the VNFM downloads the new-version file from the version center. That is, the VNFM downloads the OMM new-version file and the OMP new-version file from the version center.

In Step nine, the VNFM sends an upgrading command to the OMM in the VNF through an interface between the VNFM and the VNF.

The OMM new-version file is stored in the VNFM, and then the upgrading command contains a storage path of the OMM new-version file in the VNFM.

In Step ten, the OMM downloads the OMM new-version file from the VNFM, and starts online upgrading, and after upgrading of the OMM virtual machine is completed, the VNFM is notified.

If the VNF includes a master OMM machine and a standby OMM machine, the standby OMM machine is upgraded at first, the upgraded standby OMM machine is switched to be a host, the original master OMM machine is switched to be a standby, and then the switched standby OMM machine is upgraded.

In Step eleven, the VNFM sends a configuration data file generation command to the OMM.

In Step twelve, the OMM generates a configuration data file, and sends the configuration data file to the VNFM.

In Step thirteen, the VNFM applies the VIM for a virtual machine resource after receiving the configuration data file. A process of applying the VIM for the virtual machine resource by the VNFM is a process of controlling the VIM to generate the OMP virtual machine.

In Step fourteen, the VNFM controls the VIM to use the new-version OMP mirror image file and the configuration data file, create the OMP virtual machine and return a creation completion message containing a unique code of the OMP to the VNFM.

At this moment, the preparation work before upgrading has been completed.

In Step fifteen, at an upgrading moment, the operator sends an OMP upgrading request to the NFVO.

In Step sixteen, the NFVO initiates an OMP upgrading request to the VNFM.

In Step seventeen, the VNFM controls the newly created OMP to be powered on as a standby machine, and controls an original standby OMP machine to be powered off.

The VNFM may send a standby power-off command to an original master OMP machine, and the original master OMP machine approves the original standby OMP machine and indicates the original standby OMP machine to be powered off.

In Step eighteen, the VNFM sends a switching command to the original master OMP machine and the newly created standby OMP machine, and controls the original master OMP machine and the newly created standby OMP machine to perform data synchronization and perform master-standby switching respectively. That is, the original master OMP machine is switched to be a standby machine, and the newly created standby OMP machine is switched to be a master machine.

In Step nineteen, the OMP new-version file is downloaded from the VNFM, and the original master OMP machine switched to be the standby machine is upgraded on line.

A storage path of the OMP new-version file in the VNFM may be obtained in a process of interacting with the VNFM. The OMP new-version file is downloaded from the VNFM, and the original master OMP machine switched to be the standby machine is upgraded on line according to the OMP new-version file.

In Step twenty, after online upgrading of the original master OMP machine switched to be the standby machine and data synchronization are completed, the newly created OMP switched to be the master machine notifies the VNFM that OMP upgrading is completed.

That OMP upgrading is completed refers to that upgrading of both the master OMP machine and the standby OMP machine is completed.

In Step twenty-one, the VNFM notifies the NFVO that OMP upgrading is completed.

An OMP upgrading completion result may be read by the operator in the user interface of the NFVO.

After upgrading is completed, the standby OMP machine which is powered off may be deleted, and a resource occupied by it may be released.

A difference from the processing process of FIG. 4 is that, for replacement of the master OMP virtual machine in the VNF with the first OMP virtual machine and replacement of the standby OMP virtual machine in the VNF with the second OMP virtual machine on the basis of the system, the VNFM is required to use the new-version OMP mirror image file and the configuration data file to create two OMP virtual machines, i.e. a first OMP virtual machine and a second OMP virtual machine, and the VNFM is required to control the fourth OMP virtual machine serving as a standby machine to be powered off and enable the first OMP virtual machine, as a standby machine, to access to the VNF; data synchronization is performed between the first OMP virtual machine and a third OMP virtual machine serving as a master machine; the first OMP virtual machine is switched to be a master machine, and the third OMP virtual machine is switched to be a standby machine; the third OMP virtual machine switched to be the standby machine is powered off, and the second OMP virtual machine accesses as a standby machine; data synchronization is performed between the second OMP virtual machine and the first OMP virtual machine; and the third OMP virtual machine and the fourth OMP virtual machine are deleted.

### Fifth embodiment

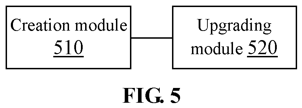

The embodiment provides a device for upgrading a VNF. FIG. 5 is a structure diagram of a device for upgrading a VNF according to a fifth embodiment of the invention.

A creation module 510 is configured to create a virtual machine of a latest version.

An upgrading module 520 is configured to replace a virtual machine corresponding to the virtual machine of the latest version in a VNF with the virtual machine of the latest version to implement upgrading of the VNF.

In an embodiment, the creation module 510 is configured to, before a preset upgrading moment, create an OMP virtual machine of a latest version; and the upgrading module 520 is configured to, at the preset upgrading moment, seamlessly replace an OMP virtual machine in the VNF with the OMP virtual machine of the latest version.

The creation module 510 is specifically configured to, if the VNF includes a master OMP virtual machine and a standby OMP virtual machine, only create a first OMP virtual machine of a latest version, or create the first OMP virtual machine of a latest version and a second OMP virtual machine of a latest version.

The upgrading module 520 is specifically configured to, if the VNF includes the master OMP virtual machine and the standby OMP virtual machine, replace the master OMP virtual machine in the VNF with the first OMP virtual machine and upgrading the standby OMP virtual machine in the VNF on line, or replace the master OMP virtual machine in the VNF with the first OMP virtual machine and replace the standby OMP virtual machine in the VNF with the second OMP virtual machine.

In an embodiment, the VNF includes: a third OMP virtual machine and a fourth OMP virtual machine, wherein the third OMP virtual machine serves as a master OMP virtual machine, and the fourth OMP virtual machine serves as a standby OMP virtual machine; and the upgrading module 520 is specifically configured to stop running the fourth OMP virtual machine, enable the first OMP virtual machine, as the standby OMP virtual machine, to access to the VNF, perform data synchronization between the first OMP virtual machine and the third OMP virtual machine, switch the first OMP virtual machine to be a master OMP virtual machine, switch the third OMP virtual machine to be a standby OMP virtual machine, and after online upgrading of the third OMP virtual machine is completed, delete the fourth OMP virtual machine.

In another embodiment, the VNF includes: a third OMP virtual machine and a fourth OMP virtual machine, wherein the third OMP virtual machine serves as a master OMP virtual machine, and the fourth OMP virtual machine serves as a standby OMP virtual machine; and the upgrading module 520 is specifically configured to stop running the fourth OMP virtual machine, enable the first OMP virtual machine, as a standby OMP virtual machine, to access to the VNF, perform data synchronization between the first OMP virtual machine and the third OMP virtual machine, switch the first OMP virtual machine to be a master OMP virtual machine, switch the third OMP virtual machine to be a standby OMP virtual machine, stop running the third OMP virtual machine, enable the second OMP virtual machine, as a standby OMP virtual machine, to access to the VNF, perform data synchronization between the second OMP virtual machine and the first OMP virtual machine and delete the third OMP virtual machine and the fourth OMP virtual machine.

In another embodiment, the creation module 510 is further configured to, before the preset upgrading moment, create an OMM virtual machine of a latest version; and the upgrading module may further be configured to, before the preset upgrading moment, and replace an OMM virtual machine in the VNF with the OMM virtual machine of the latest version.

Furthermore, the creation module 510 may be arranged in a VIM, and the upgrading module 520 may be arranged in a VNFM.

A function of the device of the embodiment has been described in the method embodiments shown in FIG. 1 to FIG. 4, so that undetailed parts in descriptions of the embodiment may refer to related specifications in the abovementioned embodiments, and will not be elaborated herein.

In addition, an embodiment of the invention further provides a computer storage medium, in which a computer-executable instruction is stored, the computer-executable instruction being configured to execute the abovementioned method for upgrading a VNF.

Although the preferred embodiments of the invention have been disclosed for exemplification, those skilled in the art may realize that it is possible to make various improvements, additions and replacements, so that the scope of the invention shall not be limited to the abovementioned embodiments.

Those skilled in the art should know that the embodiment of the invention may be provided as a method, a system or a computer program product. Therefore, the invention may adopt a form of hardware embodiment, software embodiment and combined software and hardware embodiment. Moreover, the invention may adopt a form of computer program product implemented on one or more computer-available storage media (including, but not limited to, a disk memory and an optical memory) including computer-available program codes.

The invention is described with reference to flowcharts and/or block diagrams of the method, equipment (system) and computer program product according to the embodiment of the invention. It should be understood that each flow and/or block in the flowcharts and/or the block diagrams and combinations of the flows and/or blocks in the flowcharts and/or the block diagrams may be implemented by computer program instructions. These computer program instructions may be provided for a universal computer, a dedicated computer, an embedded processor or a processor of other programmable data processing equipment to generate a machine, so that a device for realizing a function specified in one flow or more flows in the flowcharts and/or one block or more blocks in the block diagrams is generated by the instructions executed through the computer or the processor of the other programmable data processing equipment.

These computer program instructions may also be stored in a computer-readable memory capable of guiding the computer or the other programmable data processing equipment to work in a specific manner, so that a product including an instruction device may be generated by the instructions stored in the computer-readable memory, the instruction device realizing the function specified in one flow or many flows in the flowcharts and/or one block or many blocks in the block diagrams.

These computer program instructions may further be loaded onto the computer or the other programmable data processing equipment, so that a series of operating steps are executed on the computer or the other programmable data processing equipment to generate processing implemented by the computer, and steps for realizing the function specified in one flow or many flows in the flowcharts and/or one block or many blocks in the block diagrams are provided by the instructions executed on the computer or the other programmable data processing equipment.

The above is only the preferred embodiment of the invention and not intended to limit the scope of protection of the invention. The scope of protection is limited only by the appended claims.

### INDUSTRIAL APPLICABILITY

According to the embodiments of the invention, the VNF is used in a wireless communication system, and when the VNF is required to be upgraded, the virtual machine corresponding to a pre-created virtual machine of a latest version in the VNF is replaced with the pre-created virtual machine of the latest version to implement upgrading of the VNF. With the embodiments of the invention, even in an upgrading process of the VNF, the VNF may still normally run, and may normally provide business service.

## Claims

1. A method for upgrading a Virtualized Network Function, VNF, the method comprising:
creating (S110) a virtual machine of a latest version, comprising: before a preset upgrading moment, creating (S210) a first Operation Maintenance Processor, OMP, virtual machine of a latest version; and
replacing (S120) a virtual machine corresponding to the virtual machine of the latest version in the VNF with the virtual machine of the latest version;
wherein, the VNF comprises a third OMP virtual machine and a fourth OMP virtual machine, wherein the third OMP virtual machine serves as a master OMP virtual machine and the fourth OMP virtual machine serves as a standby OMP virtual machine;
wherein replacing the virtual machine corresponding to the virtual machine of the latest version in the VNF with the virtual machine of the latest version comprises:
at the preset upgrading moment, replacing the master OMP virtual machine in the VNF with the first OMP virtual machine of the latest version and upgrading the standby OMP virtual machine in the VNF on line, comprising:
stopping running (S220) the fourth OMP virtual machine and enabling the first OMP virtual machine, as a standby OMP virtual machine, to access to the VNF;
performing (S230) data synchronization between the first OMP virtual machine and the third OMP virtual machine;
switching (S240) the first OMP virtual machine to be a master OMP virtual machine, and switching the third OMP virtual machine to be a standby OMP virtual machine; and
after online upgrading of the third OMP virtual machine is completed, deleting (S250) the fourth OMP virtual machine.

2. The method according to claim 1, wherein creating the virtual machine of the latest version further comprises:
before the preset upgrading moment, creating an Operation Maintenance Module, OMM, virtual machine of a latest version; and
replacing the virtual machine corresponding to the virtual machine of the latest version in the VNF with the virtual machine of the latest version comprises:
before the preset upgrading moment, replacing an OMM virtual machine in the VNF with the OMM virtual machine of the latest version.

3. A method for upgrading a Virtualized Network Function, VNF, the method comprising:
creating (S110) a virtual machine of a latest version, comprising: before a preset upgrading moment, creating (S310) a first Operation Maintenance Processor, OMP, virtual machine of a latest version and a second OMP virtual machine of a latest version; and
replacing (S120) a virtual machine corresponding to the virtual machine of the latest version in the VNF with the virtual machine of the latest version, comprising: at the preset upgrading moment, replacing a master OMP virtual machine in the VNF with the first OMP virtual machine of the latest version and replacing a standby OMP virtual machine in the VNF with the second OMP virtual machine of the latest version;
wherein, the VNF comprises a third OMP virtual machine and a fourth OMP virtual machine, wherein the third OMP virtual machine serves as the master OMP virtual machine and the fourth OMP virtual machine serves as the standby OMP virtual machine;
wherein replacing the master OMP virtual machine in the VNF with the first OMP virtual machine of the latest version and replacing the standby OMP virtual machine in the VNF with the second OMP virtual machine of the latest version comprises:
stopping running (S320) the fourth OMP virtual machine and enabling the first OMP virtual machine, as a standby OMP virtual machine, to access to the VNF;
performing (S330) data synchronization between the first OMP virtual machine and the third OMP virtual machine;
switching (S340) the first OMP virtual machine to be a master OMP virtual machine, and switching the third OMP virtual machine to be a standby OMP virtual machine;
stopping running (S350) the third OMP virtual machine and enabling the second OMP virtual machine, as a standby OMP virtual machine, to access to the VNF;
performing (S360) data synchronization between the second OMP virtual machine and the first OMP virtual machine; and
deleting (S370) the third OMP virtual machine and the fourth OMP virtual machine.

4. The method according to claim 3, wherein creating the virtual machine of the latest version further comprises:
before the preset upgrading moment, creating an Operation Maintenance Module, OMM, virtual machine of a latest version; and
replacing the virtual machine corresponding to the virtual machine of the latest version in the VNF with the virtual machine of the latest version comprises:
before the preset upgrading moment, replacing an OMM virtual machine in the VNF with the OMM virtual machine of the latest version.

5. A device for updating a Virtualized Network Function, VNF, the device comprising:
a creation module (510), configured to, before a preset upgrading moment, create a first Operation Maintenance Processor, OMP, virtual machine of a latest version; and
an upgrading module (520), configured to replace a virtual machine corresponding to the virtual machine of the latest version in the VNF with the first OMP virtual machine of the latest version;
wherein, the VNF comprises a third OMP virtual machine and a fourth OMP virtual machine, wherein the third OMP virtual machine serves as a master OMP virtual machine and the fourth OMP virtual machine serves as a standby OMP virtual machine;
wherein the upgrading module (520) is further configured to, at the preset upgrading moment, replace the master OMP virtual machine in the VNF with the first OMP virtual machine of the latest version and upgrade the standby OMP virtual machine in the VNF on line; the upgrading module (520) is specifically configured to:
stop running the fourth OMP virtual machine and enabling the first OMP virtual machine, as a standby OMP virtual machine, to access to the VNF;
perform data synchronization between the first OMP virtual machine and the third OMP virtual machine;
switch the first OMP virtual machine to be a master OMP virtual machine and switching the third OMP virtual machine to be a standby OMP virtual machine; and
after online upgrading of the third OMP virtual machine is completed, delete the fourth OMP virtual machine.

6. The device according to claim 5, wherein
the creation module (510) is further configured to, before the preset upgrading moment, create an Operation Maintenance Module ,OMM, virtual machine of a latest version; and
the upgrading module (520) is further configured to, before the preset upgrading moment, replace an OMM virtual machine in the VNF with the OMM virtual machine of the latest version..

7. A device for updating a Virtualized Network Function, VNF, the device comprising:
a creation module (510), configured to, before a preset upgrading moment, create a first Operation Maintenance Processor, OMP, virtual machine of a latest version and a second OMP virtual machine of a latest version; and
an upgrading module (520), configured to, at the preset upgrading moment, replace a master OMP virtual machine in the VNF with the first OMP virtual machine of the latest version and replace a standby OMP virtual machine in the VNF with the second OMP virtual machine of the latest version;
wherein, the VNF comprises a third OMP virtual machine and a fourth OMP virtual machine, wherein the third OMP virtual machine serves as the master OMP virtual machine and the fourth OMP virtual machine serves as the standby OMP virtual machine; and
wherein the upgrading module (520) is specifically configured to:
stop running the fourth OMP virtual machine and enable the first OMP virtual machine, as a standby OMP virtual machine, to access to the VNF,
perform data synchronization between the first OMP virtual machine and the third OMP virtual machine,
switch the first OMP virtual machine to be a master OMP virtual machine and switch the third OMP virtual machine to be a standby OMP virtual machine,
stop running the third OMP virtual machine and enable the second OMP virtual machine, as a standby OMP virtual machine, to access to the VNF,
perform data synchronization between the second OMP virtual machine and the first OMP virtual machine; and
delete the third OMP virtual machine and the fourth OMP virtual machine.

8. The device according to claim 7, wherein
the creation module (510) is further configured to, before the preset upgrading moment, create an Operation Maintenance Module ,OMM, virtual machine of a latest version; and
the upgrading module (520) is further configured to, before the preset upgrading moment, replace an OMM virtual machine in the VNF with the OMM virtual machine of the latest version.

9. A computer storage medium having computer-executable instructions stored therein that, when executed by a processor, cause the processor to execute all steps of the method for updating a Virtualized Network Function, VNF, according to any one of claims 1-4.

## Patentansprüche

1. Verfahren zum Aktualisieren einer virtualisierten Netzwerkfunktion, VNF, wobei das Verfahren umfasst:
Erzeugen (S110) einer virtuellen Maschine der neuesten Version, umfassend: vor einem voreingestellten Aktualisierungsmoment, Erzeugen (S210) einer ersten virtuellen "Operation Maintenance Processor"-, OMP-, Maschine der neuesten Version; und
Ersetzen (S120) einer virtuellen Maschine, die der virtuellen Maschine der neuesten Version entspricht, in der VNF durch die virtuelle Maschine der neuesten Version;
wobei die VNF eine dritte virtuelle OMP-Maschine und eine vierte virtuelle OMP-Maschine umfasst, wobei die dritte virtuelle OMP-Maschine als virtuelle OMP-Mastermaschine dient und die vierte virtuelle OMP-Maschine als virtuelle OMP-Standbymaschine dient;
wobei das Ersetzen der virtuellen Maschine, die der virtuellen Maschine der neuesten Version entspricht, in der VNF durch die virtuelle Maschine der neuesten Version umfasst:
bei dem voreingestellten Aktualisierungsmoment, Ersetzen der virtuellen OMP-Mastermaschine in der VNF durch die erste virtuelle OMP-Maschine der neuesten Version und Aktualisieren der virtuellen OMP-Standbymaschine in der VNF online, umfassend:
Stoppen des Betreibens (S220) der vierten virtuellen OMP-Maschine und Ermöglichen, dass die erste virtuelle OMP-Maschine als eine virtuelle OMP-Standbymaschine auf die VNF zugreift;
Durchführen (S230) einer Datensynchronisation zwischen der ersten virtuellen OMP-Maschine und der dritten virtuellen OMP-Maschine;
Umschalten (S240) der ersten virtuellen OMP-Maschine, so dass sie eine virtuelle OMP-Mastermaschine ist, und Umschalten der dritten virtuellen OMP-Maschine, so dass sie eine virtuelle OMP-Standbymaschine ist; und
nachdem das Onlineaktualisieren der dritten virtuellen OMP-Maschine abgeschlossen ist, Löschen (S250) der vierten virtuellen OMP-Maschine.

2. Verfahren nach Anspruch 1, bei dem das Erzeugen der virtuellen Maschine der neuesten Version ferner umfasst:
vor dem voreingestellten Aktualisierungsmoment, Erzeugen einer virtuellen "Operation Maintenance Module"-, OMM-, Maschine der neuesten Version; und
wobei das Ersetzen der virtuellen Maschine, die der virtuellen Maschine der neuesten Version in der VNF entspricht, durch die virtuelle Maschine der neuesten Version umfasst:
vor dem voreingestellten Aktualisierungsmoment, Ersetzen einer virtuellen OMM-Maschine in der VNF durch die virtuelle OMM-Maschine der neuesten Version.

3. Verfahren zum Aktualisieren einer virtualisierten Netzwerkfunktion, VNF, wobei das Verfahren umfasst:
Erzeugen (S110) einer virtuellen Maschine der neuesten Version, umfassend: vor einem voreingestellten Aktualisierungsmoment, Erzeugen (S310) einer ersten virtuellen "Operation Maintenance Processor"-, OMP-, Maschine der neuesten Version und einer zweiten virtuellen OMP-Maschine der neuesten Version; und
Ersetzen (S120) einer virtuellen Maschine, die der virtuellen Maschine der neuesten Version entspricht, in der VNF durch die virtuelle Maschine der neuesten Version, umfassend: bei dem voreingestellten Aktualisierungsmoment, Ersetzen einer virtuellen OMP-Mastermaschine in der VNF durch die erste virtuelle OMP-Maschine der neuesten Version und Ersetzen einer virtuellen OMP-Standbymaschine in der VNF durch die zweite virtuelle OMP-Maschine der neuesten Version:
wobei die VNF eine dritte virtuelle OMP-Maschine und eine vierte virtuelle OMP-Maschine umfasst, wobei die dritte virtuelle OMP-Maschine als virtuelle OMP-Mastermaschine dient und die vierte virtuelle OMP-Maschine als virtuelle OMP-Standbymaschine dient;
wobei das Ersetzen der virtuellen OMP-Mastermaschine in der VNF durch die erste virtuelle OMP-Maschine der neuesten Version und das Ersetzen der virtuellen OMP-Standbymaschine in der VNF durch die zweite virtuelle OMP-Maschine der neuesten Version umfasst:
Stoppen des Betreibens (S320) der vierten virtuellen OMP-Maschine und Ermöglichen, dass die erste virtuelle OMP-Maschine als eine virtuelle OMP-Standbymaschine auf die VNF zugreift;
Durchführen (S330) einer Datensynchronisation zwischen der ersten virtuellen OMP-Maschine und der dritten virtuellen OMP-Maschine;
Umschalten (S340) der ersten virtuellen OMP-Maschine, so dass sie eine virtuelle OMP-Mastermaschine ist, und Umschalten der dritten virtuellen OMP-Maschine, so dass sie eine virtuelle OMP-Standbymaschine ist;
Stoppen des Betreibens (S350) der dritten virtuellen OMP-Maschine und Ermöglichen, dass die zweite virtuelle OMP-Maschine als eine virtuelle OMP-Standbymaschine auf die VNF zugreift;
Durchführen (S360) einer Datensynchronisation zwischen der zweiten virtuellen OMP-Maschine und der ersten virtuellen OMP-Maschine; und
Löschen (S370) der dritten virtuellen OMP-Maschine und der vierten virtuellen OMP-Maschine.

4. Verfahren nach Anspruch 3, bei dem das Erzeugen der virtuellen Maschine der neuesten Version ferner umfasst:
vor dem voreingestellten Aktualisierungsmoment, Erzeugen einer virtuellen "Operation Maintenance Module"-, OMM-, Maschine der neuesten Version; und
wobei das Ersetzen der virtuellen Maschine, die der virtuellen Maschine der neuesten Version in der VNF entspricht, durch die virtuelle Maschine der neuesten Version umfasst:
vor dem voreingestellten Aktualisierungsmoment, Ersetzen einer virtuellen OMM-Maschine in der VNF durch die virtuelle OMM-Maschine der neuesten Version.

5. Vorrichtung zum Aktualisieren einer virtualisierten Netzwerkfunktion, VNF, wobei die Vorrichtung umfasst:
ein Erzeugungsmodul (510), das vor einem voreingestellten Aktualisierungsmoment zum Erzeugen einer ersten virtuellen "Operation Maintenance Processor"-, OMP-, Maschine der neuesten Version ausgebildet ist; und
ein Aktualisierungsmodul (520), das zum Ersetzen einer virtuellen Maschine, die der virtuellen Maschine der neuesten Version entspricht, in der VNF durch die erste virtuelle OMP-Maschine der neuesten Version ausgebildet ist;
wobei die VNF eine dritte virtuelle OMP-Maschine und eine vierte virtuelle OMP-Maschine umfasst, wobei die dritte virtuelle OMP-Maschine als virtuelle OMP-Mastermaschine dient und die vierte virtuelle OMP-Maschine als virtuelle OMP-Standbymaschine dient;
wobei das Aktualisierungsmodul (520) ferner, bei dem voreingestellten Aktualisierungsmoment, zum Ersetzen der virtuellen OMP-Mastermaschine in der VNF durch die erste virtuelle OMP-Maschine der neuesten Version und Aktualisieren der virtuellen OMP-Standbymaschine in der VNF online ausgebildet ist; wobei das Aktualisierungsmodul (520) spezifisch ausgebildet ist zum:
Stoppen des Betreibens der vierten virtuellen OMP-Maschine und Ermöglichen, dass die erste virtuelle OMP-Maschine als eine virtuelle OMP-Standbymaschine auf die VNF zugreift;
Durchführen einer Datensynchronisation zwischen der ersten virtuellen OMP-Maschine und der dritten virtuellen OMP-Maschine;
Umschalten der ersten virtuellen OMP-Maschine, so dass sie eine virtuelle OMP-Mastermaschine ist, und Umschalten der dritten virtuellen OMP-Maschine, so dass sie eine virtuelle OMP-Standbymaschine ist; und
nachdem das Onlineaktualisieren der dritten virtuellen OMP-Maschine abgeschlossen ist, Löschen der vierten virtuellen OMP-Maschine.

6. Vorrichtung nach Anspruch 5, bei der
das Erzeugungsmodul (510) ferner, vor dem voreingestellten Aktualisierungsmoment, zum Erzeugen einer virtuellen "Operation Maintenance Module"-, OMM-, Maschine der neuesten Version ausgebildet ist; und
das Aktualisierungsmodul (520) ferner, vor dem voreingestellten Aktualisierungsmoment, zum Ersetzen einer virtuellen OMM-Maschine in der VNF durch die virtuelle OMM-Maschine der neuesten Version ausgebildet ist.

7. Vorrichtung zum Aktualisieren einer virtualisierten Netzwerkfunktion, VNF, wobei die Vorrichtung umfasst:
ein Erzeugungsmodul (510), das vor einem voreingestellten Aktualisierungsmoment zum Erzeugen einer ersten virtuellen "Operation Maintenance Processor"-, OMP-, Maschine der neuesten Version und einer zweiten virtuellen OMP-Maschine der neuesten Version ausgebildet ist; und
ein Aktualisierungsmodul (520), das bei dem voreingestellten Aktualisierungsmoment zum Ersetzen einer virtuellen OMP-Mastermaschine in der VNF durch die erste virtuelle OMP-Maschine der neuesten Version und Ersetzen einer virtuellen OMP-Standbymaschine in der VNF durch die zweite virtuelle OMP-Maschine der neuesten Version ausgebildet ist;
wobei die VNF eine dritte virtuelle OMP-Maschine und eine vierte virtuelle OMP-Maschine umfasst, wobei die dritte virtuelle OMP-Maschine als virtuelle OMP-Mastermaschine dient und die vierte virtuelle OMP-Maschine als virtuelle OMP-Standbymaschine dient; und
wobei das Aktualisierungsmodul (520) spezifisch ausgebildet ist zum:
Stoppen des Betreibens der vierten virtuellen OMP-Maschine und Ermöglichen, dass die erste virtuelle OMP-Maschine als eine virtuelle OMP-Standbymaschine auf die VNF zugreift;
Durchführen einer Datensynchronisation zwischen der ersten virtuellen OMP-Maschine und der dritten virtuellen OMP-Maschine;
Umschalten der ersten virtuellen OMP-Maschine, so dass sie eine virtuelle OMP-Mastermaschine ist, und Umschalten der dritten virtuellen OMP-Maschine, so dass sie eine virtuelle OMP-Standbymaschine ist;
Stoppen des Betreibens der dritten virtuellen OMP-Maschine und Ermöglichen, dass die zweite virtuelle OMP-Maschine als eine virtuelle OMP-Standbymaschine auf die VNF zugreift;
Durchführen einer Datensynchronisation zwischen der zweiten virtuellen OMP-Maschine und der ersten virtuellen OMP-Maschine; und
Löschen der dritten virtuellen OMP-Maschine und der vierten virtuellen OMP-Maschine.

8. Vorrichtung nach Anspruch 7, bei der
das Erzeugungsmodul (510) ferner, vor dem voreingestellten Aktualisierungsmoment, zum Erzeugen einer virtuellen "Operation Maintenance Module"-, OMM-, Maschine der neuesten Version ausgebildet ist; und
das Aktualisierungsmodul (520) ferner, vor dem voreingestellten Aktualisierungsmoment, zum Ersetzen einer virtuellen OMM-Maschine in der VNF durch die virtuelle OMM-Maschine der neuesten Version ausgebildet ist.

9. Computerspeichermedium, in dem computerausführbare Anweisungen gespeichert sind, die, wenn sie durch einen Prozessor ausgeführt werden, bewirken, dass der Prozessor alle Schritte des Verfahrens zum Aktualisieren einer virtualisierten Netzwerkfunktion, VNF, nach einem der Ansprüche 1 bis 4 ausführen.

## Revendications

1. Procédé de mise à niveau d'une fonction de réseau virtualisée, VNF, le procédé comprenant les étapes :
créer (S110) une machine virtuelle d'une dernière version, comprenant : avant un moment de mise à niveau préétabli, la création (S210) d'une première machine virtuelle de processeur de maintenance d'exploitation, OMP, d'une dernière version ; et
remplacer (S120) une machine virtuelle correspondant à la machine virtuelle de la dernière version dans la VNF par la machine virtuelle de la dernière version ;
dans lequel, la VNF comprend une troisième machine virtuelle OMP et une quatrième machine virtuelle OMP, dans lequel la troisième machine virtuelle OMP sert de machine virtuelle OMP maîtresse et la quatrième machine virtuelle OMP sert de machine virtuelle OMP de secours ;
dans lequel le remplacement de la machine virtuelle correspondant à la machine virtuelle de la dernière version dans la VNF par la machine virtuelle de la dernière version comprend :
au moment de mise à niveau préétabli, le remplacement de la machine virtuelle OMP maîtresse dans la VNF par la première machine virtuelle OMP de la dernière version et la mise à niveau en ligne de la machine virtuelle OMP de secours dans la VNF, comprenant :
l'arrêt d'exécution (S220) de la quatrième machine virtuelle OMP et l'activation de la première machine virtuelle OMP, en tant que machine virtuelle OMP de secours, pour accéder à la VNF ;
la réalisation (S230) d'une synchronisation de données entre la première machine virtuelle OMP et la troisième machine virtuelle OMP ;
le changement (S240) de la première machine virtuelle OMP à une machine virtuelle OMP maîtresse, et le changement de la troisième machine virtuelle OMP à une machine virtuelle OMP de secours ; et
après que la mise à niveau en ligne de la troisième machine virtuelle OMP est achevée, la suppression (S250) de la quatrième machine virtuelle OMP.

2. Procédé selon la revendication 1, dans lequel la création de la machine virtuelle de la dernière version comprend en outre :
avant le moment de mise à niveau préétabli, créer une machine virtuelle de module de maintenance d'exploitation, OMM, d'une dernière version ; et
le remplacement de la machine virtuelle correspondant à la machine virtuelle de la dernière version dans la VNF par la machine virtuelle de la dernière version comprend :
avant le moment de mise à niveau préétabli, remplacer une machine virtuelle OMM dans la VNF par la machine virtuelle OMM de la dernière version.

3. Procédé de mise à niveau d'une fonction de réseau virtualisée, VNF, le procédé comprenant les étapes :
créer (S110) une machine virtuelle d'une dernière version, comprenant : avant un moment de mise à niveau préétabli, la création (S310) d'une première machine virtuelle de processeur de maintenance d'exploitation, OMP, d'une dernière version et d'une deuxième machine virtuelle OMP d'une dernière version ; et
remplacer (S120) une machine virtuelle correspondant à la machine virtuelle de la dernière version de la VNF par la machine virtuelle de la dernière version, comprenant : au moment de mise à niveau préétabli, le remplacement d'une machine virtuelle OMP maîtresse dans la VNF par la première machine virtuelle OMP de la dernière version et le remplacement d'une machine virtuelle OMP de secours dans la VNF par la deuxième machine virtuelle OMP de la dernière version ;
dans lequel, la VNF comprend une troisième machine virtuelle OMP et une quatrième machine virtuelle OMP, dans lequel la troisième machine virtuelle OMP sert de machine virtuelle OMP maîtresse et la quatrième machine virtuelle OMP sert de machine virtuelle OMP de secours ;
dans lequel le remplacement de la machine virtuelle OMP maîtresse dans la VNF par la première machine virtuelle OMP de la dernière version et le remplacement de la machine virtuelle OMP de secours dans la VNF par la deuxième machine virtuelle OMP de la dernière version comprennent les étapes :
arrêter l'exécution (S320) de la quatrième machine virtuelle OMP et l'activation de la première machine virtuelle OMP, en tant que machine virtuelle OMP de secours, pour accéder à la VNF ;
réaliser (S330) une synchronisation de données entre la première machine virtuelle OMP et la troisième machine virtuelle OMP ;
changer (S340) la première machine virtuelle OMP pour être une machine virtuelle OMP maîtresse, et changer la troisième machine virtuelle OMP pour être une machine virtuelle OMP de secours ;
arrêter l'exécution (S350) de la troisième machine virtuelle OMP et activer la deuxième machine virtuelle OMP, en tant que machine virtuelle OMP de secours, pour accéder à la VNF ;
réaliser (S360) une synchronisation de données entre la deuxième machine virtuelle OMP et la première machine virtuelle OMP ; et
supprimer (S270) la troisième machine virtuelle OMP et la quatrième machine virtuelle OMP.

4. Procédé selon la revendication 3, dans lequel la création de la machine virtuelle de la dernière version comprend en outre :
avant le moment de mise à niveau préétabli, créer une machine virtuelle de module de maintenance d'exploitation, OMM, d'une dernière version ; et
le remplacement de la machine virtuelle correspondant à la machine virtuelle de la dernière version dans la VNF par la machine virtuelle de la dernière version comprend :
avant le moment de mise à niveau préétabli, remplacer une machine virtuelle OMM dans la VNF par la machine virtuelle OMM de la dernière version.

5. Dispositif de mise à niveau d'une fonction de réseau virtualisée, VNF, le dispositif comprenant :
un module de création (510), configuré, avant un moment de mise à niveau préétabli, pour créer une première machine virtuelle de processeur de maintenance d'exploitation, OMP, d'une dernière version ; et
un module de mise à niveau (520), configuré pour remplacer une machine virtuelle correspondant à la machine virtuelle de la dernière version dans la VNF par la machine virtuelle OMP de la dernière version ;
dans lequel, la VNF comprend une troisième machine virtuelle OMP et une quatrième machine virtuelle OMP, dans lequel la troisième machine virtuelle OMP sert de machine virtuelle OMP maîtresse et la quatrième machine virtuelle OMP sert de machine virtuelle OMP de secours ;
dans lequel le module de mise à niveau (520) est en outre configuré, au moment de mise à niveau préétabli, pour remplacer la machine virtuelle OMP maîtresse dans la VNP par la première machine virtuelle OMP de la dernière version et mettre à niveau en ligne la machine virtuelle OMP de secours dans la VNF, le module de mise à niveau (520) est spécifiquement configuré pour :
arrêter l'exécution de la quatrième machine virtuelle OMP et activer la première machine virtuelle OMP, en tant que machine virtuelle OMP de secours, pour accéder à la VNF ;
réaliser une synchronisation de données entre la première machine virtuelle OMP et la troisième machine virtuelle OMP ;
changer la première machine virtuelle OMP pour être une machine virtuelle OMP maîtresse, et changer la troisième machine virtuelle OMP pour être une machine virtuelle OMP de secours ; et
après que la mise à niveau en ligne de la troisième machine virtuelle OMP est achevée, supprimer la quatrième machine virtuelle OMP.

6. Dispositif selon la revendication 5, dans lequel
le module de création (510) est en outre configuré, avant le moment de mise à niveau préétabli, pour créer une machine virtuelle de module de maintenance d'exploitation, OMM, d'une dernière version ; et
le module de mise à niveau (520) est en outre configuré, avant le moment de mise à niveau préétabli, pour remplacer une machine virtuelle OMM dans la VNF par la machine virtuelle OMM de la dernière version.

7. Dispositif de mise à niveau d'une fonction de réseau virtualisée, VNF, le dispositif comprenant :
un module de création (510), configuré, avant un moment de mise à niveau préétabli, pour créer une première machine virtuelle de processeur de maintenance d'exploitation, OMP, d'une dernière version et une deuxième machine virtuelle OMP d'une dernière version ; et
un module de mise à niveau (520), configuré, au moment de mise à niveau préétabli, pour remplacer une machine virtuelle OMP maîtresse dans la VNF par la première machine virtuelle OMP de la dernière version et remplacer une machine virtuelle OMP de secours dans la VNF par la deuxième machine virtuelle OMP de la dernière version ;
dans lequel, la VNF comprend une troisième machine virtuelle OMP et une quatrième machine virtuelle OMP, dans lequel la troisième machine virtuelle OMP sert de machine virtuelle OMP maîtresse et la quatrième machine virtuelle OMP sert de machine virtuelle OMP de secours ; et
dans lequel le module de mise à niveau (520) est spécifiquement configuré pour :
arrêter l'exécution de la quatrième machine virtuelle OMP et activer la première machine virtuelle OMP, en tant que machine virtuelle OMP de secours, pour accéder à la VNF ;
réaliser une synchronisation de données entre la première machine virtuelle OMP et la troisième machine virtuelle OMP ;
changer la première machine virtuelle OMP pour être une machine virtuelle OMP maîtresse, et changer la troisième machine virtuelle OMP pour être une machine virtuelle OMP de secours,
arrêter l'exécution de la troisième machine virtuelle OMP et activer la deuxième machine virtuelle OMP, en tant que machine virtuelle OMP de secours, pour accéder à la VNF,
réaliser une synchronisation de données entre la deuxième machine virtuelle OMP et la première machine virtuelle OMP ; et
supprimer la troisième machine virtuelle OMP et la quatrième machine virtuelle OMP.

8. Dispositif selon la revendication 7, dans lequel
le module de création (510) est en outre configuré, avant le moment de mise à niveau préétabli, pour créer une machine virtuelle de module de maintenance d'exploitation, OMM, d'une dernière version ; et
le module de mise à niveau (520) est en outre configuré, avant le moment de mise à niveau préétabli, pour remplacer une machine virtuelle OMM dans la VNF par la machine virtuelle OMM de la dernière version.

9. Support de stockage d'ordinateur dans lequel sont stockées des instructions exécutables par ordinateur qui, lorsqu'elles sont exécutées par un processeur, amènent le processeur à exécuter toutes les étapes du procédé de mise à niveau d'une fonction de réseau virtualisée, VNF, selon l'une quelconque des revendications 1 à 4.
